# EUROPÄISCHE PATENTANMELDUNG

(11) **EP 3 819 842 A1**
(43) Veröffentlichungstag der Anmeldung: **12.05.2021**
(21) Anmeldenummer: 20201202.7
(22) Anmeldetag: 12.10.2020
(51) Int. Cl.: G06Q 10/08

(54) **HAUSHALTSLAGERVORRICHTUNG**

(30) Priorität: 06.11.2019 DE 102019129843
(71) Anmelder: Miele & Cie. KG, 33332 Gütersloh (DE)
(72) Erfinder: Hachmeister, Tim, 32457 Porta Westfalica (DE); Lörcks, Sebastian, 33335 Gütersloh (DE); Wei, Qian, 33330 Gütersloh (DE); Neumann, Richard, 32805 Hornbad-Meinberg (DE); Jung, Eugen, 33334 Gütersloh (DE); Randazzo, Danilo, 33613 Bielefeld (DE)

(57) **Zusammenfassung**

Die Erfindung betrifft eine Haushaltslagervorrichtung (1) mit einem Nutzraum (12) mit wenigstens einem Lagerungselement (13; 14; 15), vorzugsweise mit einer Mehrzahl von Lagerungselementen (13, 14, 15), welches zur Aufnahme und zur Lagerung wenigstens eines Objekts (3), vorzugsweise wenigstens eines Lebensmittels (3) und/oder wenigstens eines Haushaltsmittels (3), ausgebildet ist, und mit wenigstens einer Bilderfassungseinheit (21), welche ausgebildet und angeordnet ist, den Nutzraum (12) zumindest abschnittsweise optisch zu erfassen. Die Haushaltslagervorrichtung (1) ist dadurch gekennzeichnet, dass die Haushaltslagervorrichtung (1) ausgebildet ist, basierend auf den optisch erfassten Bilddaten der Bilderfassungseinheit (21) eine Orientierung und/oder eine Positionierung eines Objekts (3) zu erkennen, wobei die Haushaltslagervorrichtung (1) ferner ausgebildet ist, basierend auf der erkannten Orientierung und/oder Positionierung des Objekts (3) einen Zustand und bzw. oder einen Füllstand des Inhalts des Objekts (3) zu bestimmen.

## Beschreibung

Die Erfindung betrifft eine Haushaltslagervorrichtung nach dem Oberbegriff des Patentanspruchs 1 sowie ein Objekterkennungssystem für eine derartige Haushaltslagervorrichtung gemäß dem Patentanspruch 12.

Seitdem der Mensch Lebensmittel herstellt, welche über seinen aktuellen Bedarf hinausgehen, stellt sich die Frage der Lagerung der Lebensmittel, um diese auch später noch konsumieren zu können. Insbesondere müssen die Lebensmittel haltbar gemacht und in diesem Zustand gelagert werden können. Dies gilt auch für andere Bedarfsgegenstände, welche z.B. trocken, lichtgeschützt und dergleichen zu lagern sein können.

Heutzutage werden Lebensmittel, Haushaltsmittel und dergleichen in privaten Haushalten sowie z.B. in der Gastronomie und in Hotels z.B. in Lagerregalen, in Vorratsregalen und in Küchenschränken sowie in Schubladen und Fächern von Küchenzeilen gelagert. Hier können Lebensmittel gelagert werden, welche entsprechend verpackt und haltbar sind. Lebensmittel wie z.B. Reis, Nudeln und dergleichen können getrocknet und z.B. in Kunststoff oder in Pappe verpackt sein. Andere Lebensmittel können in Gläsern oder als Konservendosen luftdicht verschlossen und in Glas bzw. in Metall verpackt sein. Derartig verpackte Lebensmittel können möglichst kühl aber dennoch bei Raumtemperatur z.B. in einem Vorratsraum bzw. in einer Speisekammer in offenen Lagerregalen oder in mit Türen verschließbaren Vorratsschränken oder Küchenschränken sowie in der Küche in Schubladen und Fächern der Küchenzeile ggf. eng gepackt und ggfs. gestapelt gelagert werden. Dies gilt vergleichbar für Bedarfsgegenstände eines Haushalts wie z.B. Backpapier, Frischhaltefolie, Staubsaugerbeutel, Haushalts- sowie Toilettenpapier und dergleichen, welche üblicherweise in Pappe oder in Kunststofffolie verpackt ebenfalls z.B. an den zuvor beschriebenen Stellen im Vorratsraum bzw. in der Speisekammer, in der Küche aber auch in einem Haushaltsraum zumindest trocken gelagert werden können. Auch können Weinflaschen in einem Weinregal oder in einem Weinklimaschrank bzw. Weintemperierschrank gelagert werden.

Für einige Lebensmittel kann es erforderlich sein, diese gekühlt oder sogar gefroren zu lagern. Hierzu können Kühlgeräte bzw. Gefriergeräte wie z.B. Kühlschränke und Kühltruhen bzw. Gefrierschränke und Gefriertruhen verwendet werden. Diese können in ihrem schließbaren Innenraum, welcher auch als Nutzraum bezeichnet werden kann, die zu kühlenden bzw. zu gefrierenden Lebensmittel aufnehmen und die hierfür erforderliche Temperatur im Innenraum erzeugen. Dies kann für leicht verderbliche Lebensmittel wie z.B. Fleisch- und Wurstwaren, Molkereiprodukte, Fruchtsäfte sowie frisches Obst und Gemüse gelten, welche insbesondere zum zeitnahen Verzehr üblicherweise gekühlt im Haushalt gelagert werden. Kühlschränke sind dabei allgemein in jeder Küche anzutreffen, während Kühltruhen sowie Gefriergeräte nicht unbedingt in jedem Haushalt zu finden sind und dann eher im Vorratsraum, in der Speisekammer, im Keller, in der Garage etc. aufgestellt werden.

Da der Vorrat an Lebensmitteln und bzw. oder Haushaltsmitteln stets im Laufe der Zeit verbraucht wird, ist dieser regelmäßig vom Benutzer wieder aufzufüllen. Der Benutzer sollte daher einen Überblick über die gelagerten Lebensmittel und bzw. oder Haushaltsmittel haben, um deren Vorrat durch Einkaufen rechtzeitig wieder gezielt auffüllen zu können. Hierzu kann der Vorrat vom Benutzer optisch erfasst werden. Die einzukaufenden Waren können dann notiert werden, z.B. klassisch handschriftlich auf einen Einkaufszettel oder auch elektronisch z.B. in einem Smartphone, damit sich der Benutzer diese Informationen nicht merken muss sowie diese Informationen vergessen kann.

Um einem Benutzer z.B. eines Kühlschranks automatisch eine Übersicht über die dort gelagerten Lebensmittel zur Verfügung stellen zu können, ist bekannt, automatisch zu erkennen, welches Lebensmittel vom Benutzer als Person aus dem Innenraum des Kühlschranks als Betriebsvolumen entnommen und in den Innenraum des Kühlschranks eingebracht wird. Diese Information kann dem Benutzer als Inventar des Kühlschranks zur Verfügung gestellt werden, um z.B. den nächsten Einkauf zielgerichtet planen zu können, ohne sich selbst einen Überblick über den aktuellen Inhalt des Kühlschranks verschaffen zu müssen. Auch kann diese Information einem Benutzer während des Einkaufs zur Verfügung gestellt sowie auch fortlaufend aktualisiert werden.

Nachteilig ist hierbei jedoch, dass lediglich Veränderungen des Inventars des Kühlschranks erfasst werden können. Dieses System kann somit nur dann sinnvoll angewendet werden, wenn mit einem leeren Kühlschrank begonnen und dann jede Entnahme sowie Eingabe von Lebensmitteln erkannt wird. Insbesondere können unerkannte bzw. fehlerhaft erkannte Entnahmen sowie Eingaben von Lebensmitteln zu einer fehlerhaften Information über das Inventar des Kühlschranks führen und den Benutzer beim Einkaufen eher fehlleiten als unterstützen. Dieser Nachteil kann sich mit der Zeit bzw. mit der zunehmenden Anzahl von fehlerhaften Informationen verstärken.

Die DE 10 2016 223 754 A1 beschreibt ein Haushaltssystem mit wenigstens einem Haushaltsmöbel und bzw. oder Haushaltsgerät, insbesondere einem Haushaltskältegerät, mit wenigstens einer Identifizierungseinheit, welche zumindest einem innerhalb des Haushaltsmöbels und bzw. oder Haushaltsgeräts angeordneten und bzw. oder anordenbaren Konsumgut zugeordnet und dazu vorgesehen ist, eine individuelle Identifizierungsinformation bereitzustellen, und mit einer Erfassungseinheit, welche dazu vorgesehen ist, die Identifizierungsinformation zu erfassen. Ein Benutzer kann eine individuelle Identifizierungseinheit an einem Lebensmittel anordnen, z.B. wenn er das Lebensmittel gekauft hat und zum ersten Mal in den Kühlschrank stellt. Diese Identifizierungseinheit kann dann diesem Typ von Lebensmittel z.B. mittels eines Smartphones vom Benutzer zugeordnet werden. Mittels einer optischen Erfassung der Identifizierungseinheiten soll das entsprechende Lebensmittel sicherer erkannt und identifiziert werden können als ohne die Identifizierungseinheit. Dies soll die Genauigkeit der automatisierten Inventarerfassung eines Kühlschranks verbessern.

Nachteilig ist hierbei jedoch, dass der Benutzer die Lebensmittel von Hand mit jeweils einer Identifizierungseinheit versehen muss. Die Identifizierungseinheit muss jeweils auch vom Benutzer wieder von Hand entfernt werden, wenn das Lebensmittel verbraucht bzw. dessen Verpackung weggeworfen wird. Gerade nicht verwendete Identifizierungseinheiten müssen vom Benutzer gelagert werden, was zusätzlichen Platz erfordern kann. In jedem Fall stellt die Nutzung des Haushaltssystems der DE 10 2016 223 754 A1 einen nicht unerheblichen Zeitaufwand dar, welcher den Benutzer von der Verwendung des Haushaltssystems der DE 10 2016 223 754 A1 abhalten kann. Dies kann insbesondere bei einem wöchentlichen Großeinkauf für eine mehrköpfige Familie der Fall sein.

Zu beachten ist hierbei, dass der Benutzer das Haushaltssystem der DE 10 2016 223 754 A1 auch durchgängig anwenden muss, um den entsprechenden Nutzen zu erhalten. Wird beispielsweise ein gesamter Einkauf, insbesondere ein wöchentlicher Großeinkauf für eine mehrköpfige Familie, ohne die Verwendung der Identifizierungseinheiten in den Kühlschrank eingeräumt, so kann dies zu einer Ungenauigkeit der automatisch erstellten Inventarliste des Kühlschrankeinhalts führen, welche das Haushaltssystem der DE 10 2016 223 754 A1 für den Benutzer unbrauchbar machen kann.

Auch muss der Benutzer darauf achten, dass er jedem Lebensmitteltyp den entsprechenden Typ von Identifizierungseinheit richtig zuordnet. Werden Identifizierungseinheiten den falschen Lebensmitteltypen zugeordnet, so kann auch dies zu Ungenauigkeiten der automatisch erstellten Inventarliste des Kühlschrankeinhalts führen. Dies kann für einen Benutzer jedoch eine derartige zusätzliche Anstrengung, gerade bei einem wöchentlichen Großeinkauf für eine mehrköpfige Familie, bedeuten, dass das Haushaltssystem der DE 10 2016 223 754 A1 nicht verwendet wird.

Sowohl die vorstehend genannte Übersicht als auch das Haushaltssystem der DE 10 2016 223 754 A1 basieren dabei auf einer optischen Erfassung der Lebensmittel, welche sich z.B. im Innenraum eines Kühlschranks befinden bzw. aus dem Innenraum des Kühlschranks entnommen und in den Innenraum des Kühlschranks eingebracht werden. Somit ist jeweils wenigstens eine Bilderfassungseinheit in Form einer Kamera ein wesentliches Element bei der Erfassung des Inhalts eines Kühlschranks, welche in Kombination mit einer nachgeschalteten Bildverarbeitungseinheit betrieben wird. Üblicherweise werden derartige Bildverarbeitungseinheiten mittels Mikroprozessor und bzw. oder einem FPGA (Field Programmable Gate Array) realisiert.

Die Erfassung der Lebensmittel als Objekte kann dabei statisch wie bei dem Haushaltssystem der DE 10 2016 223 754 A1 erfolgen, bei dem ein Bild oder mehrere Bilder vom Innenraum des Kühlschranks z.B. dann aufgenommen werden, wenn der Benutzer die Tür des Kühlschranks schließt und bzw. oder öffnet. U.a. folgende Randbedingungen können die Qualität der Bilderfassung der Lebensmittels und infolge dessen auch die Qualität der Erkennung der Lebensmittel sowie die Erstellung der Bestandsliste bzw. Inventarliste des Kühlschrankeinhalts beeinträchtigen:
- Verdeckung des Objekts, z.B. durch die Hand des Benutzers,
- Bewegungsunschärfe, z.B. resultierend aus den Einflüssen der Geschwindigkeit der Bewegung des Objekts beim Be- bzw. Entladen, aus den Lichtverhältnissen und bzw. oder aus der Verschlusszeit einer Kamera als Bilderfassungseinheit.

Diese Randbedingungen können in vielen Fällen nicht sinnvoll geändert werden, da sie sich insbesondere aus dem Nutzerverhalten wie z.B. aus der Einlagerungs- bzw. Entnahmegeschwindigkeit der Objekte, der Menge der gleichzeitig bei einem Einlagerungsvorgang in den Kühlschrank platzierten Objekte sowie durch Umverpackungen wie z.B. Aufbewahrungsboxen etc. oder als eine Folge des Aufstellortes des Lebensmittels innerhalb des Innenraums des Kühlschranks ergeben. Das natürliche Verhalten des Benutzers, so z.B. der Bewegungsablauf und die Geschwindigkeit beim Beladen, die Positionierung der Objekte im Kühlschrank usw. wird durch die Erfassung der Objekte in der Bewegung nämlich nicht verändert.

Auch kann die Qualität der Bilderfassung durch die Bilderfassungseinheit an Rahmen- und Umweltbedingungen geknüpft sein, welche den Rahmen- und Umweltbedingungen eines Kühlschranks sowie dem Nutzerverhalten widersprechen können. So erfordert ein scharfes Bild eines bewegten Objekts u.a. eine gewisse vorhandene Lichtmenge, welche im Innenraum eines Kühlschranks nicht an jeder Stelle und insbesondere nicht bei Verdeckung eines relevanten Objekts durch andere Objekte und bzw. oder durch die Hand des Benutzers gewährleistet werden kann. Somit kann die Erfassung eines Bildes mit unzureichender Bildqualität daraus resultieren, dass das aufgenommene Bild mangels ausreichender Beleuchtung sowie gleichzeitiger Bewegung des Objekts nicht scharf genug ist, um erfolgreich verarbeitet zu werden. Aufgrund ungeeigneter Beleuchtung kann das erfasste Bild auch einen Farbstich haben, d.h. der Weißabgleich kann nicht korrekt sein, was ebenfalls die Bildverarbeitung negativ beeinflussen kann. Demzufolge können bei der Verwendung einer optischen Bilderfassungseinheit wie z.B. einer Kamera in vielen Fällen die für die Bildverarbeitung relevanten Merkmale eines Objekts wie z.B. dessen Farbe, Form, dominante Logos, Schriftzüge usw. für eine zuverlässige Objekterkennung nicht bestimmt werden, da die Bildqualität nicht ausreichten ist.

Auch kann aufgrund der Bewegung des Objekts durch den Benutzer und die Stelle im Innenraum des Kühlschranks, an dem das Objekt zu platzieren bzw. von wo das Objekt zu entnehmen ist, nicht sichergestellt werden, dass das Objekt von der Bilderfassungseinheit in dessen Bereich der Tiefenschärfe bzw. Schärfentiefe bildlich erfasst werden kann.

Ferner kann die Verwendung einer vergleichsweise kostengünstigen Bilderfassungseinheit und bzw. oder Bildverarbeitungseinheit zu einer vergleichsweise schlechten Qualität des erfassten Bildes bzw. dessen Verarbeitungsergebnisses führen, auch wenn dies die Kosten derartige Systeme reduzieren kann. Spart der Benutzer somit am Preis für die Unterstützung der automatisierten Erstellung einer Inventarliste des Kühlschrankinhalts, kann hieraus ein entsprechend unzureichendes Ergebnis resultieren. Da für einen Benutzer eines Objekterkennungssystems für Lebensmittel die Erkennungsrate der Lebensmittel das entscheidende Kriterium für die Akzeptanz des Systems sein kann, können zur Reduzierung der Kosten vorgenommene Qualitätseinbußen der Bilderfassung und bzw. oder der Bildverarbeitung der Anwendung des Systems bzw. dessen Anschaffung entgegenstehen.

Nachteilig ist bei dem Haushaltssystem der DE 10 2016 223 754 A1, dass aus den jeweils erfassten optischen Bilddaten ein Füllstand einer Verpackung eines Objekts nicht bestimmt werden kann. Die Information des Füllstands der Verpackung eines Objekts kann jedoch für den Benutzer sehr relevant sein, um die Zubereitung von Speisen sowie einen Einkauf basierend auf möglichst konkreten Informationen über den Vorrat in der Haushaltslagervorrichtung planen und durchführen zu können.

Beispielsweise kann zwar eine Milchpackung mit dem Haushaltssystem der DE 10 2016 223 754 A1 erkannt und im Inventar der Haushaltslagervorrichtung mit der Stückzahl "1" aufgeführt werden. Jedoch lässt diese Angabe offen, ob tatsächlich z.B. 1 Liter Milch in der Verpackung der Milchpackung enthalten ist oder lediglich ein halber Liter oder sogar nur ein unwesentlicher Rest. Auch bleibt offen, ob die Milchpackung überhaupt noch verschlossen ist bereits angebrochen wurde, was Auswirkungen auf die Haltbarkeit der Milch haben kann.

Wird somit die Information, dass eine Milchpackung in der Haushaltslagervorrichtung vorhanden ist, vom Benutzer als eine volle Milchpackung interpretiert, welche tatsächlich eher leer ist, so kann ein Nachkaufen von Milch beim nächsten Einkauf unterbleiben und dies zu einem Mangel an Milch im Haushalt führen. Wird hingegen vom Benutzer davon ausgegangen, dass eine Milchpackung in der Haushaltslagervorrichtung als grundsätzlich eher leer zu interpretieren ist, um einen Mangel an Milch im Haushalt sicher zu vermeiden, kann dies zu einem unnötigen Nachkaufen von Milch beim nächsten Einkauf führen, falls tatsächlich noch eine volle Milchpackung vorhanden ist. Dieser Überbestand an Milch erfordert zusätzlichen Platz in der Haushaltslagervorrichtung wie z.B. im Kühlschrank und kann auch dazu führen, dass die zusätzlich gekaufte Milchpackung nicht verbraucht wird und daher ungenutzt entsorgt werden muss. Dies kann zu einer Verschwendung von Lebensmitteln führen. Dies kann vergleichbar für Haushaltsmittel oder andere Produkte gelten.

Der Erfindung stellt sich somit das Problem, eine Haushaltslagervorrichtung der eingangs beschriebenen Art bereitzustellen, so dass der Zustand und bzw. oder der Füllstand eines Objekts zuverlässiger, einfacher, kostengünstiger, schneller, variantenreicher und bzw. oder mit geringerem Aufwand bestimmt werden kann. Zumindest soll eine Alternative zu bekannten derartigen Haushaltslagervorrichtungen geschaffen werden.

Erfindungsgemäß wird dieses Problem durch eine Haushaltslagervorrichtung mit den Merkmalen des Patentanspruchs 1 sowie durch ein Objekterkennungssystem mit den Merkmalen des Patentanspruchs 12 gelöst. Vorteilhafte Ausgestaltungen und Weiterbildungen der Erfindung ergeben sich aus den nachfolgenden Unteransprüchen.

Somit betrifft die Erfindung eine Haushaltslagervorrichtung mit einem Nutzraum mit wenigstens einem Lagerungselement, vorzugsweise mit einer Mehrzahl von Lagerungselementen, welches zur Aufnahme und zur Lagerung wenigstens eines Objekts, vorzugsweise wenigstens eines Lebensmittels und bzw. oder wenigstens eines Haushaltsmittels, ausgebildet ist. Eine derartige Haushaltslagervorrichtung kann sowohl offen als auch schließbar, z.B. mittels wenigstens einer schwenkbaren oder schiebbaren Tür, einer Klappe oder einem Deckel, ausgebildet sein. Die Haushaltslagervorrichtung kann ein Regal, ein Schrank, eine Küchenzeile und dergleichen sein, wie eingangs beschrieben.

Die Haushaltslagervorrichtung weist auch wenigstens eine Bilderfassungseinheit auf, welche ausgebildet und angeordnet ist, den Nutzraum zumindest abschnittsweise optisch zu erfassen. Die Bilderfassungseinheit kann insbesondere eine optische Kamera sein. In jedem Fall kann die Bilderfassungseinheit dazu ausgebildet sein, flächige Bilder im für den Menschen sichtbaren Spektrum des Lichts von zumindest einem Abschnitt des Nutzraums der Haushaltslagervorrichtung zu erfassen und z.B. einer Bildverarbeitungseinheit der Haushaltslagervorrichtung zur Verfügung zu stellen. Die Bilderfassungseinheit ist dabei dazu ausgebildet, insbesondere statische Bilder zu erfassen, wobei die Bilderfassungseinheit auch dazu ausgebildet sein kann, zusätzlich dynamische Bilder bzw. Bildfolgen zu erfassen.

Die erfindungsgemäße Haushaltslagervorrichtung ist dadurch gekennzeichnet, dass die Haushaltslagervorrichtung ausgebildet ist, basierend auf den optisch erfassten Bilddaten der Bilderfassungseinheit eine Orientierung und bzw. oder eine Positionierung eines Objekts zu erkennen, wobei die Haushaltslagervorrichtung ferner ausgebildet ist, basierend auf der erkannten Orientierung und bzw. oder Positionierung des Objekts einen Zustand und bzw. oder einen Füllstand des Inhalts des Objekts zu bestimmen.

Mit anderen Worten kann seitens der Haushaltslagervorrichtung bzw. einer Bildverarbeitungseinheit der Haushaltslagervorrichtung aus den optisch erfassten Bilddaten der Bilderfassungseinheit für wenigstens ein Objekt, welches im Nutzraum angeordnet ist, zum einen dessen Position innerhalb des Nutzraums erkannt werden. Insbesondere kann unterschieden werden, welchem Lagerungselement des Nutzraums das Objekt zugeordnet ist, was sich insbesondere aus statischen Bilddaten ergeben kann. Hierbei kann z.B. zwischen verschiedenen Böden innerhalb des Nutzraums als Lagerungselemente unterschieden werden. Auch kann unterschieden werden, ob das Objekt z.B. in eine Schublade als Lagerungselement eingeräumt wurde, was insbesondere aus dynamischen Bilddaten erkannt werden kann. Auch kann unterschieden werden, ob das Objekt in einem Türfach als Lagerungselement angeordnet ist. Aus diesen unterschiedlichen Möglichkeiten, ein Objekt innerhalb des Nutzraums einer Haushaltslagervorrichtung zur Lagerung anzuordnen, kann auf ein Nutzerverhalten bei der Lagerung sowie beim Konsum geschlossen und dies zur Bestimmung des Zustands und bzw. oder des Füllstands der Verpackung des Objekts verwendet werden.

Zum anderen kann seitens der Haushaltslagervorrichtung bzw. der Bildverarbeitungseinheit aus den optisch erfassten Bilddaten der Bilderfassungseinheit für wenigstens ein Objekt, welches im Nutzraum angeordnet ist, dessen Orientierung innerhalb des Nutzraums erkannt werden. Dies gilt insbesondere für die Orientierung einer Öffnung der Verpackung des Objekts, wie weiter unten noch näher beschrieben werden wird. Dies kann beispielsweise aus den optisch erfassten Bilddaten der Bilderfassungseinheit direkt erfolgen, indem das Objekt erkannt wird und damit auch dessen Form bzw. Erstreckung bekannt ist. Zusätzlich oder alternativ kann aus den optisch erfassten Bilddaten der Bilderfassungseinheit die Kontur des Objekts erkannt und hieraus auf die Orientierung geschlossen werden.

Aus den Informationen der erkannten Positionierung und bzw. oder der erkannten Orientierung des Objekts kann dann auf den Zustand und bzw. oder auf den Füllstand des Inhalts geschlossen werden. So kann daraus, dass ein Benutzer ein Objekt weiter unten innerhalb des Nutzraums der Haushaltslagervorrichtung angeordnet, geschlossen werden, dass es sich um ein Objekt mit vollständigem bzw. unangebrochenem Inhalt handelt, da diese Stelle im Nutzraum für den Benutzer weniger einfach und schnell erreichbar und somit geeignet ist Objekte zu lagern, auf welche weniger häufig bzw. erst später zugegriffen werden soll. Das Objekt kann somit mit dem Zustand "originalverschlossen" oder "unangebrochen" versehen werden, um Auswirkungen auf die Beurteilung der Haltbarkeit bzw. Lagerungsfähigkeit haben kann.

Wird hingegen ein Objekt eher im oberen Bereich des Nutzraums und insbesondere auf der Höhe des Oberkörpers des Benutzers gelagert, kann es sich eher um ein Objekt mit unvollständigen bzw. angebrochenem Inhalt handelt, auf welches der Benutzer bereits zugegriffen hat und auch welches er auch zeitnah wieder zugreifen wird. Dies kann ebenso gelten, falls das Objekt in einem Türfach einer Tür der Haushaltslagervorrichtung angeordnet ist, da der Benutzer auch auf diese Position vergleichsweise einfach und schnell zugreifen kann. In diesem Fall kann das Objekt eine Information über seinen Zustand aufweisen, welche "geöffnet" oder "angebrochen" lauten kann.

Zusätzlich oder alternativ kann auch aus einer liegenden Orientierung des Objekts geschlossen werden, dass der Inhalt des Objekts vollständig bzw. unangebrochen ist, da üblicherweise lediglich geschlossene Objekte liegend aufbewahrt werden. Wird hingegen das Objekt stehend angeordnet, so kann hieraus geschlossen werden, dass der Inhalt des Objekts unvollständig bzw. angebrochen ist, wie weiter unten noch näher beschrieben wird. Hierbei kann auch zwischen einem flach oder hochkant liegenden Objekt unterschieden werden, wie weiter unten noch näher beschrieben wird. Wird ferner eine Öffnung des Objekts aus den optisch erfassten Bilddaten der Bilderfassungseinheit erkannt, so kann auch der Umstand, ob die Öffnung der Verpackung eher nach oben oder nach unten zeigt, zur Bestimmung des Füllstands der Verpackung des Objekts herangezogen werden, wie weiter unten noch näher beschrieben wird.

Hierdurch kann eine alternative Bestimmung des Zustands des Objekts erfolgen. Auch kann auf diese Art und Weise eine Plausibilitätsprüfung der Schlussfolgerungen erfolgen, welche aus der erkannten Positionierung des Objekts im Nutzraum gezogen werden, wie zuvor beschrieben.

In jedem Fall kann eine Bestimmung des Zustands des Objekts bzw. des Inhalts des Objekts dahingehend erfolgen, dass zwischen einem vollständigen bzw. unangebrochenem Inhalt der Verpackung des Objekts und einem unvollständigen bzw. angebrochenem Inhalt unterschieden werden kann. Gleichzeitig kann auf diese Art und Weise zwischen einem vollen bzw. maximalen. Füllstand der Verpackung des Objekts und einem nicht mehr vollen bzw. maximalen Füllstand unterschieden werden.

Diese Information kann einem Benutzer oder anderen Empfängern wie z.B. einem Kochfeld zur Verfügung gestellt werden, um den Benutzer bei der Bevorratung, bei der Einkaufsplanung und -durchführung sowie bei der Zubereitung von Speisen zu informieren. Insbesondere kann eine Bestands- bzw. Inventarliste der Haushaltslagervorrichtung eine zusätzliche Information aufweisen, was den Nutzen für den Benutzer z.B. bei der Unterstützung beim Einkaufen sowie bei der Planung der Essenszubereitung erhöhen und auch die Akzeptanz des Benutzers dieser Informationen erhöhen kann.

Gemäß einem Aspekt der Erfindung ist die Haushaltslagervorrichtung ausgebildet, basierend auf den optisch erfassten Bilddaten der Bilderfassungseinheit zwischen wenigstens einer Orientierung eines stehenden Objekts und eines liegenden Objekts zu unterscheiden. Wie bereits zuvor erwähnt kann hieraus geschlossen werden, dass die Verpackung eines stehend gelagerten Objekts bereits geöffnet bzw. angebrochen ist, so dass der Inhalt als nicht mehr vollständig angesehen werden kann. Wird das Objekt liegend gelagert, so kann davon ausgegangen werden, dass das Objekt vollständig verschlossen bzw. originalverschlossen ist und kein Inhalt aus der Verpackung gelangen kann. Dies kann eine Unterscheidung zumindest dieser beiden Zustände bzw. Füllständen des Objekts ermöglichen.

Gemäß einem weiteren Aspekt der Erfindung ist die Haushaltslagervorrichtung ausgebildet, basierend auf den optisch erfassten Bilddaten der Bilderfassungseinheit zwischen wenigstens einer Orientierung eines flach liegenden Objekts und eines hochkant liegenden Objekts zu unterscheiden. Auch aus diesem Unterschied kann eine Schlussfolgerung auf den Zustand bzw. Füllstand des Inhalts gezogen werden. So kann die hochkante Lagerung des Objekts darauf hindeuten, dass der Benutzer eine Öffnung der Verpackung des Objekts möglichst hoch anordnen möchte, weil die Verpackung bereits geöffnet und ein Teil des Inhalts entnommen ist, und zwar so viel Inhalt, dass eine liegende Lagerung möglich ist, ohne des Inhalts aus einer undicht geschlossenen Öffnung austreten zu lassen. Gleichzeitig kann davon ausgegangen werden, dass noch ausreichend Inhalt in der Verpackung vorhanden ist, um eine flach liegende Lagerung zu vermeiden. Somit kann aus einem als hochkant liegend erkannten Objekt geschlossen werden, dass dort z.B. höchstens der halbe Inhalt noch enthalten ist, jedoch gleichzeitig mehr als eine geringe Restmenge wie z.B. lediglich ein Viertel des Inhalts. Ein Viertel oder weniger des Inhalts kann dann angenommen werden, falls das Objekt flach liegend gelagert wird. Somit kann näher zwischen diesen Füllstandmengen unterschieden werden.

Gemäß einem weiten Aspekt der Erfindung ist die Haushaltslagervorrichtung ausgebildet, basierend auf den optisch erfassten Bilddaten der Bilderfassungseinheit eines ersten Zeitpunkts die Orientierung und bzw. oder Positionierung des Objekts in einer ersten Lagerposition zu erkennen, wobei die Haushaltslagervorrichtung ferner ausgebildet ist, basierend auf den optisch erfassten Bilddaten der Bilderfassungseinheit eines zweiten Zeitpunkts die Orientierung und bzw. oder Positionierung des Objekts in einer zweiten Lagerposition zu erkennen. Mit anderen Worten kann ein Objekt während seiner Lagerung an verschiedenen Positionen im Nutzraum sowie in verschiedenen Orientierungen verfolgt und aus den Veränderungen der Positionierungen und bzw. oder Orientierungen auf den Füllstand des Inhalts des Objekts geschlossen werden. Dies kann die Genauigkeit der Aussage erhöhen und damit die Zuverlässigkeit dieser Informationen für den Benutzer verbessern, was dessen Akzeptanz dieser Unterstützung steigern kann.

Wird beispielsweise ein Milchkarton erstmalig im Nutzraum optisch erfasst und bestimmt, so wird zwar eher ein liegend gelagerter Milchkarton unangebrochen sein als ein stehend gelagerter, wie zuvor beschrieben. Jedoch kann ein Benutzer auch einen unangebrochenen Milchkarton z.B. in einem Türfach stehend lagern, um schnell und einfach auf diesen zugreifen zu können. Somit ist diese Schlussfolgerung mit einer gewissen Unsicherheit versehen. Wird jedoch erkannt, dass ein Milchkarton zu einem ersten Zeitpunkt zunächst liegend gelagert wurde und zu einem zweiten Zeitpunkt stehend gelagert wird, so kann aus dieser Veränderung der Lagerung bzw. aus diesem Ablauf der Lagerpositionen mit einer höheren Wahrscheinlichkeit geschlussfolgert werden, dass der Milchkarton zum ersten Zeitpunkt noch originalverschlossen war, zwischenzeitlich vom Benutzer zum Öffnen und zum Konsumieren aus der Haushaltslagervorrichtung entnommen und zum zweiten Zeitpunkt angebrochen, d.h. mit reduziertem Füllstand des Inhalts, wieder in den Nutzraum der Haushaltslagervorrichtung zurückgestellt wurde. Dies kann die Wahrscheinlichkeit erhöhen, dass die Information, der Milchkarton ist zumindest angebrochen und nicht mehr ganz gefüllt, zutreffend ist. Auch kann hierauf auf einen zumindest etwas reduzierten Füllstand geschlossen werden.

Gemäß einem weiteren Aspekt der Erfindung ist die Haushaltslagervorrichtung ausgebildet, basierend auf den optisch erfassten Bilddaten der Bilderfassungseinheit eine Öffnung des Objekts zu erkennen, wobei die Haushaltslagervorrichtung ferner ausgebildet ist, basierend auf der erkannten Öffnung des Objekts den Füllstand des Inhalts des Objekts zu bestimmen. Wie bereits zuvor erwähnt kann auch diese Information dazu verwendet werden, den Füllstand des Inhalts der Verpackung des Objekts zu bestimmen bzw. um die Wahrscheinlichkeit einer zutreffenden Aussage bzw. Information zu erhöhen.

Gemäß einem weiteren Aspekt der Erfindung ist das Objekt ein Produkt mit einer undurchsichtigen Verpackung. Unter einer undurchsichtigen Verpackung wird eine Verpackung, eine Ummantelung oder dergleichen des Objekts verstanden, durch welches hindurch eine optische Bilderfassung nicht bzw. nur unzureichend möglich ist, um den Inhalt bzw. den Füllstand des Inhalts erkennen zu können. Gerade bei derartigen Verpackungen kann die Anwendung der vorliegenden Erfindung vorteilhaft sein, wie bereits beschrieben.

Gemäß einem weiteren Aspekt der Erfindung weist das Objekt eine zumindest im Wesentlichen quaderförmige Form, vorzugsweise eine quaderförmige Verpackung, auf. Eine derartige Form kann die Unterscheidung der Orientierung der Lagerung, wie zuvor beschrieben, unterstützen bzw. vereinfachen und damit auch die Wahrscheinlichkeit einer zutreffend erkannten Orientierung erhöhen. Dies kann es begünstigen, aus der erkannten Orientierung des Objekts die zuvor beschriebenen Schlussfolgerungen zu ziehen. Insbesondere kann dieser Aspekt der vorliegenden Erfindung auf Milchkartons, Saftkartons und dergleichen angewendet werden, welche eine relevante Produktart z.B. für die Lagerung in Kühlschränken darstellen können.

Gemäß einem weiteren Aspekt der Erfindung ist die Bilderfassungseinheit ausgebildet und angeordnet, eine Mehrzahl der Lagerungselemente derart optisch zu erfassen, so dass die dort gelagerten Objekte zumindest abschnittsweise optisch erfasst werden können. Hierdurch kann die Bilderfassungseinheit besonders geeignet sein, statische Ansichten wenigstens eines Objekts zu erfassen, nachdem das Objekt im Nutzraum der Haushaltslagervorrichtung angeordnet wurde bzw. bevor das Objekt aus dem Nutzraum der Haushaltslagervorrichtung entnommen wird. Dies kann die Auswertung einer Momentaufnahme des Nutzraums ermöglichen bzw. begünstigen, um das Objekt bzw. alle dort gelagerten Objekte zu erfassen. Mit anderen Worten kann eine statische Bilderfassung erfolgen, so dass die Nachteile einer dynamischen Bilderfassung vermieden werden können.

Gemäß einem weiteren Aspekt der Erfindung ist der Nutzraum mittels wenigstens eines Schließelements, vorzugsweise mittels wenigstens einer Tür, schließbar ausgebildet, wobei die Bilderfassungseinheit an dem Schließelement dem Nutzraum zugewandt angeordnet ist. Hierdurch kann für die die Bilderfassungseinheit eine Ausrichtung auf die Lagerungselemente hin erfolgen, so dass die optische Erfassung der dort aufgenommenen und gelagerten Objekte begünstigt werden kann.

Gemäß einem weiteren Aspekt der Erfindung ist die Haushaltslagervorrichtung ausgebildet, vorzugsweise einem Benutzer, eine Information über den bestimmten Zustand und bzw. oder über den bestimmten Füllstand des Objekts zur Verfügung zu stellen. Somit kann einem bestimmten Objekt eine weitere Information in Form des Zustands bzw. des Füllstands des Inhalts der Verpackung des Objekts wie zuvor beschrieben zur Verfügung gestellt werden. Diese Information kann einem Benutzer z.B. angezeigt werden, um ihn über den Zustand bzw. den Füllstand des gelagerten Objekts der Haushaltslagervorrichtung z.B. mittels eines Smartphones zu informieren. Diese Informationen können dabei vorzugsweise einem Benutzer, wie zuvor beschrieben, zur Verfügung gestellt werden aber auch z.B. einem Haushaltsgerät wie z.B. einem Kochfeld, um den Benutzer bei der Zubereitung von Speisen zu unterstützen, indem z.B. die aktuell verwendeten Lebensmittel mit ihren verfügbaren Mengen bzw. Füllständen sowie einem Zustand wie z.B. eine reduzierte verbleibende Haltbarkeit angezeigt werden. Auch können diese Informationen einer zentralen Steuereinheit eines Haushalts und dergleichen zur Verfügung gestellt werden.

Gemäß einem weiteren Aspekt der Erfindung ist die Haushaltslagervorrichtung ausgebildet, vorzugsweise einem Benutzer, eine Information der bestimmten Zustände und bzw. oder der bestimmten Füllstände aller Objekte zur Verfügung zu stellen, welche im Nutzraum gelagert sind. Hierdurch kann der Benutzer bei der Bevorratung, beim Einkauf sowie bei der Planung der Zubereitung von Speisen unterstützt werden. Diese Informationen können dabei vorzugsweise einem Benutzer, wie zuvor beschrieben, zur Verfügung gestellt werden aber auch z.B. einem Haushaltsgerät wie z.B. einem Kochfeld, um dort den Bestand der Haushaltslagervorrichtung samt Füllständen und Zuständen bei der Planung bzw. bei der Zubereitung von Speisen berücksichtigen zu können. Auch können diese Informationen einer zentralen Steuereinheit eines Haushalts und dergleichen zur Verfügung gestellt werden.

Die vorliegende Erfindung betrifft auch ein Objekterkennungssystem für eine Haushaltslagervorrichtung wie zuvor beschrieben mit wenigstens einer Bilderfassungseinheit, welche ausgebildet ist, einen Nutzraum der Haushaltslagervorrichtung zumindest abschnittsweise optisch zu erfassen, wobei das Objekterkennungssystem ausgebildet ist, basierend auf den optisch erfassten Bilddaten der Bilderfassungseinheit eine Orientierung und bzw. oder eine Positionierung eines Objekts zu erkennen, wobei das Objekterkennungssystem ferner ausgebildet ist, basierend auf der erkannten Orientierung und bzw. oder Positionierung des Objekts einen Zustand und bzw. oder einen Füllstand des Inhalts des Objekts zu bestimmen. Auf diese Art und Weise kann ein Objekterkennungssystem zur Verfügung gestellt werden, um eine erfindungsgemäße Haushaltslagervorrichtung umsetzen und deren Eigenschaften und Vorteile nutzen zu können. Insbesondere kann hierdurch die Möglichkeit geschaffen werden, eine vorhandene und bekannte Haushaltslagervorrichtung mit einem erfindungsgemäßen Objekterkennungssystem auszurüsten und so zu einer erfindungsgemäßen Haushaltslagervorrichtung zu machen.

Die zuvor beschriebenen Aspekte der erfindungsgemäßen Haushaltslagervorrichtung, welche die Informationen über den Inhalt der Haushaltslagervorrichtung betreffen, können dabei auch seitens des Objekterkennungssystems umgesetzt werden. Insbesondere können mehrere bestimmte Objekte und insbesondere alle bestimmten Objekte, welche von der Haushaltsvorratsvorrichtung aktuell aufgenommen werden sowie ggfs. deren Historie, auch von dem Objekterkennungssystem gespeichert und, insbesondere einem Benutzer, zur Verfügung gestellt werden, wie zuvor hinsichtlich der erfindungsgemäßen Haushaltsvorratsvorrichtung beschrieben.

Ein Ausführungsbeispiel der Erfindung ist in den Zeichnungen rein schematisch dargestellt und wird nachfolgend näher beschrieben. Es zeigt
- Figur 1: eine perspektivische schematische Darstellung eines Kühlschranks als Beispiel einer erfindungsgemäßen Haushaltslagervorrichtung;
- Figur 2: eine perspektivische schematische Darstellung eines Objekts in vier verschiedenen Lagerungspositionen mit unterschiedlichen Orientierungen.

Die o.g. Figuren werden in kartesischen Koordinaten betrachtet. Es erstreckt sich eine Längsrichtung X, welche auch als Tiefe X oder als Länge X bezeichnet werden kann. Senkrecht zur Längsrichtung X erstreckt sich eine Querrichtung Y, welche auch als Breite Y bezeichnet werden kann. Senkrecht sowohl zur Längsrichtung X als auch zur Querrichtung Y erstreckt sich eine vertikale Richtung Z, welche auch als Höhe Z bezeichnet werden kann.

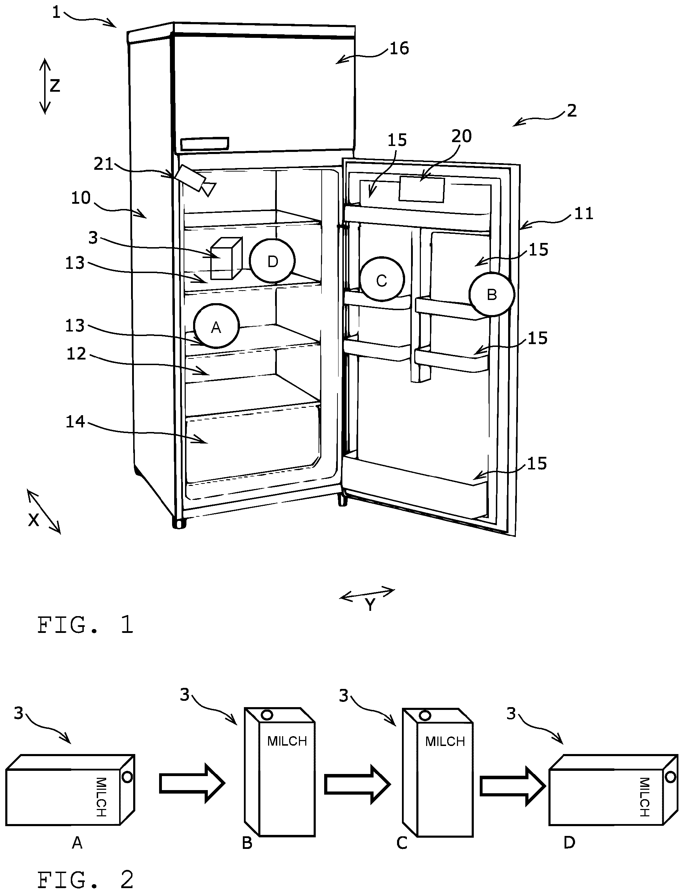

Figur 1 zeigt eine erfindungsgemäße Haushaltslagervorrichtung 1, welche beispielhaft als Kühlgerät 1 bzw. als Haushaltskühlgerät 1 in Form eines Kühlschranks 1 ausgeführt ist. Die erfindungsgemäße Haushaltslagervorrichtung 1 kann jedoch auch ein offenes oder ein mit wenigstens einer Tür schließbares Lagerregal, Vorratsregal und dergleichen sowie ein offener oder mit Türen schließbarer Lagerschrank, Vorratsschrank und dergleichen sein, welcher in einem Lagerraum, in einem Vorratsraum, in einer Speisekammer, in einem Vorratskeller und dergleichen zur Lagerung von Lebensmittels und bzw. oder Haushaltsmitteln verwendet werden kann. Die erfindungsgemäße Haushaltslagervorrichtung 1 kann ebenso ein offener oder ein mit wenigstens einer Tür verschließbarer Küchenschrank sowie eine Küchenzeile bzw. ein Element einer Küchenzeile sein, welches zur Lagerung von Lebensmittels und bzw. oder Haushaltsmitteln verwendet werden kann. Die erfindungsgemäße Haushaltslagervorrichtung 1 kann ferner ein mit wenigstens einer Tür verschließbarer Weinklimaschrank bzw. ein mit wenigstens einer Tür verschließbarer Weintemperierschrank sein. Als Haushaltskühlgerät 1 kann die erfindungsgemäße Haushaltslagervorrichtung 1 auch ein sonstiges Kühlgerät wie z.B. eine Kühltruhe oder auch ein Gefriergerät wie z.B. ein Gefrierschrank oder eine Gefriertruhe sein. In jedem Fall kann eine erfindungsgemäße Haushaltslagervorrichtung 1 eine jegliche Lagervorrichtung für Lebensmittel und bzw. oder Haushaltswaren sein, welche in einem privaten Haushalten sowie z.B. in der Gastronomie und in Hotels verwendet werden kann.

Der Kühlschrank 1 weist ein quaderförmiges Gehäuse 10 auf, welches einen Innenraum 12 als Nutzraum 12 umgibt und mittels eines Schließelements 11 in Form einer Tür 11 geöffnet und geschlossen werden kann, um den Innenraum 12 einem Benutzer zugänglich zu machen bzw. um den Innenraum 12 zu verschließen. Innerhalb des Innenraums 12 sind mehrere Böden 13 horizontal angeordnet, um auf sich drauf Lebensmittel und dergleichen aufzunehmen. Im unteren Bereich des Innenraums 12 ist eine Schublade 14 angeordnet, welche in der Tiefe X vom Benutzer hervor- bzw. herausgezogen bzw. in der entgegengesetzten Richtung in den Innenraum 12 eingeschoben werden kann. Auch hier können z.B. Lebensmittel z.B. in Form von Obst, Gemüse und dergleichen aufbewahrt werden. Ferner weist die Tür 11 an ihrer dem Innenraum 12 zugewandten Innenseite mehrere Türfächer 15 auf, in welche insbesondere Flaschen, Tetrapacks und dergleichen angeordnet werden können. Die Böden 13, die Schublade 14 sowie die Türfächer 15 bilden Lagerungselemente 13, 14, 15 des Kühlschranks 1, welche sich bei geschlossener Tür 11 alle im Nutzraum 12 bzw. im Innenraum 12 des Kühlschranks 1 befinden.

Oberhalb des Innenraums 12 weist der Kühlschrank 1 noch eine Gefriereinheit 16 auf, welche ebenfalls mit einer separaten Tür (nicht bezeichnet) schließbar ist. Dort können gefrorene Lebensmittel aufgenommen werden, was hier jedoch nicht näher betrachtet werden soll.

Der Kühlschrank 1 ist mit einem erfindungsgemäßen Objekterkennungssystem 2 ausgerüstet, welches eine Bilderfassungseinheit 21 in Form einer optischen Kamera 21 aufweist, welche signalübertragend mit einer Bildverarbeitungseinheit 20 verbunden ist. Die optische Kamera 21 ist an der oben äußeren Ecke der Innenseite der Tür 11 derart angeordnet und ausgerichtet, so dass die optische Kamera 21 den Bereich vor dem Nutzraum 12 sowie den Nutzraum 12 selbst optisch erfassen kann, wenn die Tür 11 geöffnet ist. Hierdurch kann eine optische Erfassung des Nutzraums 12 mit dessen Lagerelementen 13, 14, 15 erfolgen, um wenigstens ein Objekt 3 als Produkt 3 zu erfassen, welches in diesem Fall ein Lebensmittel 3 ist. Das Lebensmittel 3 kann dabei z.B. ein loses Lebensmittel 3 wie z.B. ein Stück Obst oder Gemüse wie z.B. eine Banane sein, aber auch ein verpacktes Lebensmittel wie z.B. ein Joghurtbecher oder ein Lebensmittel wie z.B. Wurstscheiben, welche sich innerhalb einer Frischhaltedose oder dergleichen befinden.

Seitens der Bildverarbeitungseinheit 20 kann das Lebensmittel 3 z.B. in einem statisch erfassten Bild des Nutzraums 12 erkannt und bestimmt werden, z.B. als Milchkarton 3. Im Laufe seiner Verwendung bzw. des Verbrauchs des Inhalts durchläuft der Milchkarton 3 dabei viere Lagerungspositionen A-D in unterschiedlichen Orientierungen, wie im Vergleich der Figuren 1 und 2 dargestellt ist. Hieraus können nun folgende Schlussfolgerungen auf die Verwendung, auf den Zustand bzw. auf den hieraus resultierenden Füllstand des Inhalts des Milchkartons 3 gezogen werden.

In der Lagerungsposition A wird der Milchkarton 3 hochkant liegend auf einem unteren Boden 13 im Nutzraum 12 des Kühlschranks 1 vom Benutzer angeordnet und erstmalig basierend auf den optisch erfassten Bilddaten der Kamera 21 erkannt. Sowohl aus der Positionierung des Milchkartons 3 an einer weniger einfach und schnell zugänglichen Stelle innerhalb des Nutzraums 12 des Kühlschranks 1 sowie aufgrund der liegenden Orientierung kann geschlossen werden, dass der Milchkarton 3 noch vollkommen verschlossen, unangebrochen und damit vollständig gefüllt ist. Diese Informationen kann dem Milchkarton 3 zugeordnet und z.B. einem Benutzer im Rahmen einer Inventar- bzw. Bestandsliste des Kühlschranks 3 mitgeteilt werden, wo der Milchkarton 3 mit dem Zustand "unangebrochen" und mit dem Füllstand "100%" gespeichert werden kann.

Wird nun der betrachtete Milchkarton 3 vom Benutzer dem Nutzraum 12 des Kühlschranks 1 entnommen und anschließend, insbesondere nach einer kurzen Zeitdauer, wieder in den Nutzraum 12 des Kühlschranks 1 zurückgestellt, jedoch aufrecht stehend sowie an der Lagerungsposition B in einem Türfach 15 der Tür 11 des Kühlschranks 1, so kann zumindest aus dieser Orientierung an sich geschlossen werden, dass der Milchkarton 3 angebrochen und damit nicht mehr dicht verschlossen ist, weshalb eine aufrechte Lagerung erforderlich ist. Auch kann hieraus geschlossen werden, dass der Milchkarton 3 noch einen vergleichsweise hohen Füllstand von z.B. wenigstens der Hälfte aufweist, da ansonsten auch eine hochkant liegende Lagerung mit nach oben gerichteter Öffnung in Frage käme, wie weiter unten noch näher beschrieben werden wird. Diese Schlussfolgerung kann auch durch die Positionierung des Milchkartons 3 in einem Türfach 15 der Tür 11 des Kühlschranks 1 unterstützt werden, da dort üblicherweise in der Benutzung befindliche Lebensmittel 3 vom Benutzer angeordnet werden, um schnell und einfach auf diese zugreifen zu können. Ferner kann auch aus der Veränderung der Positionierung des Milchkartons 3 von der Lagerungsposition A in die Lagerungsposition B geschlossen werden, dass ein zuvor unbenutztes Lebensmittel 3 nunmehr verwendet wird und damit einen reduzierten Füllstand aufweisen wird.

Jede dieser Schlussfolgerungen alleinig kann bereits zu der Erkenntnis führen, dass der Milchkarton 3 in der Lagerungsposition B sowie aufgrund der aufrecht stehenden Lagerung einen nicht mehr vollen Füllstand der Milch aufweisen wird. Werden diese Schlussfolgerungen miteinander kombiniert betrachtet, so bestätigen sich diese Schlussfolgerungen, was das Ergebnis dieser Überlegungen bestätigt und die Wahrscheinlichkeit erhöht, den Füllstand der Milch des Milchkartons 3 in der zweiten Lagerungsposition B richtig als "zwischen 50% und 100% gefüllt" sowie den Zustand des Milchkartons 3 als "angebrochen" bestimmt zu haben.

Wird zu einem weiteren Zeitpunkt der betrachtete Milchkarton 3 in ein anderen Türfach 15 der Tür 11 des Kühlschranks 1 an eine dritte Lagerungsposition C gestellt, ohne seine Orientierung zu verändern, so kann zumindest auf einen erneuten Konsum geschlossen und z.B. der Füllstand auf "zwischen 50% und 75% gefüllt" geändert werden.

Wird zu einem weiteren Zeitpunkt der betrachtete Milchkarton 3 wieder auf einen Boden 13 des Nutzraums 12 des Kühlschranks 1 jedoch an der vierten Lagerungsposition D gelegt, so kann zum einen auf einen erneuten Konsum geschlossen werden. Zum anderen kann aus der liegenden Orientierung gefolgert werden, dass der Füllstand unter 50% gefallen sein sollte, falls gleichzeitig eine Öffnung (nicht dargestellt) des Milchkartons 3 nach oben zeigt, siehe Figur 2. Zeigt die Öffnung des Milchkartons 3 nach unten, kann der Füllstand des Milchkartons 3 nur noch sehr gering wie z.B. unterhalb von 25% liegen, da sonst die Gefahr zu groß wäre, dass Milch aus einer möglicherweise unzureichend geschlossenen Öffnung auslaufen könnte. Somit kann der Füllstand der Milch im Milchkarton 3 entsprechend bestimmt werden.

Auf diese Art und Weise kann einem Benutzer sowie anderen Informationsempfängern alleinig aus den optisch erfassten Bilddaten der Kamera 21 eine zumindest grobe Angabe über den Füllstand der Milch im Milchkarton 3 zur Verfügung gestellt werden. Auch kann mit Milchkarton 3 eine Information in Form eines Zustands zugeordnet werden, ob der Milchkarton 3 angebrochen zu sein scheint oder nicht, was sich auf die Haltbarkeit der Milch auswirken und daher eine ebenfalls interessante Information darstellen kann. Dies kann einen Benutzer insbesondere bei der Planung des Vorrats bzw. der Einkäufe sowie bei der Zubereitung von Speisen unterstützen.

### Bezugszeichenliste (Bestandteil der Beschreibung)

- A: erste Lagerungsposition des Objekts 3
- B: zweite Lagerungsposition des Objekts 3
- C: dritte Lagerungsposition des Objekts 3
- D: vierte Lagerungsposition des Objekts 3

- X: Längsrichtung; Tiefe; Länge
- Y: Querrichtung; Breite
- Z: vertikale Richtung; Höhe

- 1: Haushaltslagervorrichtung; Kühlgerät; Haushaltskühlgerät; Kühlschrank
- 10: Gehäuse
- 11: Schließelement; Tür
- 12: Nutzraum; Innenraum
- 13: Lagerungselemente; Böden
- 14: Lagerungselement; Schublade
- 15: Lagerungselemente; Türfächer
- 16: Gefriereinheit

- 2: Objekterkennungssystem
- 20: Bildverarbeitungseinheit
- 21: Bilderfassungseinheit; optische Kamera

- 3: Objekt; Produkt; Lebensmittel; Haushaltsmittel; Milchkarton

## Patentansprüche

1. Haushaltslagervorrichtung (1)
mit einem Nutzraum (12) mit wenigstens einem Lagerungselement (13; 14; 15), vorzugsweise mit einer Mehrzahl von Lagerungselementen (13, 14, 15), welches zur Aufnahme und zur Lagerung wenigstens eines Objekts (3), vorzugsweise wenigstens eines Lebensmittels (3) und/oder wenigstens eines Haushaltsmittels (3), ausgebildet ist, und
mit wenigstens einer Bilderfassungseinheit (21), welche ausgebildet und angeordnet ist, den Nutzraum (12) zumindest abschnittsweise optisch zu erfassen,
**dadurch gekennzeichnet, dass**
die Haushaltslagervorrichtung (1) ausgebildet ist, basierend auf den optisch erfassten Bilddaten der Bilderfassungseinheit (21) eine Orientierung und/oder eine Positionierung eines Objekts (3) zu erkennen,
wobei die Haushaltslagervorrichtung (1) ferner ausgebildet ist, basierend auf der erkannten Orientierung und/oder Positionierung des Objekts (3) einen Zustand und/oder einen Füllstand des Inhalts des Objekts (3) zu bestimmen.

2. Haushaltslagervorrichtung (1) nach Anspruch 1, **dadurch gekennzeichnet, dass**
die Haushaltslagervorrichtung (1) ausgebildet ist, basierend auf den optisch erfassten Bilddaten der Bilderfassungseinheit (21) zwischen wenigstens einer Orientierung eines stehenden Objekts (3) und eines liegenden Objekts (3) zu unterscheiden.

3. Haushaltslagervorrichtung (1) nach Anspruch 2, **dadurch gekennzeichnet, dass**
die Haushaltslagervorrichtung (1) ausgebildet ist, basierend auf den optisch erfassten Bilddaten der Bilderfassungseinheit (21) zwischen wenigstens einer Orientierung eines flach liegenden Objekts (3) und eines hochkant liegenden Objekts (3) zu unterscheiden.

4. Haushaltslagervorrichtung (1) nach einem der vorangehenden Ansprüche, **dadurch gekennzeichnet, dass**
die Haushaltslagervorrichtung (1) ausgebildet ist, basierend auf den optisch erfassten Bilddaten der Bilderfassungseinheit (21) eines ersten Zeitpunkts die Orientierung und/oder Positionierung des Objekts (3) in einer ersten Lagerposition (A) zu erkennen, die Haushaltslagervorrichtung (1) ferner ausgebildet ist, basierend auf den optisch erfassten Bilddaten der Bilderfassungseinheit (21) eines zweiten Zeitpunkts die Orientierung und/oder Positionierung des Objekts (3) in einer zweiten Lagerposition (B) zu erkennen.

5. Haushaltslagervorrichtung (1) nach einem der vorangehenden Ansprüche, **dadurch gekennzeichnet, dass**
die Haushaltslagervorrichtung (1) ausgebildet ist, basierend auf den optisch erfassten Bilddaten der Bilderfassungseinheit (21) eine Öffnung des Objekts (3) zu erkennen,
wobei die Haushaltslagervorrichtung (1) ferner ausgebildet ist, basierend auf der erkannten Öffnung des Objekts (3) den Füllstand des Inhalts des Objekts (3) zu bestimmen.

6. Haushaltslagervorrichtung (1) nach einem der vorangehenden Ansprüche, **dadurch gekennzeichnet, dass**
das Objekt (3) ein Produkt (3) mit einer undurchsichtigen Verpackung ist.

7. Haushaltslagervorrichtung (1) nach einem der vorangehenden Ansprüche, **dadurch gekennzeichnet, dass**
das Objekt (3) eine zumindest im Wesentlichen quaderförmige Form, vorzugsweise eine quaderförmige Verpackung, aufweist.

8. Haushaltslagervorrichtung (1) nach einem der vorangehenden Ansprüche, **dadurch gekennzeichnet, dass**
die Bilderfassungseinheit (21) ausgebildet und angeordnet ist, eine Mehrzahl der Lagerungselementen (13, 14, 15) derart optisch zu erfassen, so dass die dort gelagerten Objekte (3) zumindest abschnittsweise optisch erfasst werden können.

9. Haushaltslagervorrichtung (1) nach einem der vorangehenden Ansprüche, **dadurch gekennzeichnet, dass**
der Nutzraum (12) mittels wenigstens eines Schließelements (11), vorzugsweise mittels wenigstens einer Tür (11), schließbar ausgebildet ist,
wobei die Bilderfassungseinheit (21) an dem Schließelement (11) dem Nutzraum (12) zugewandt angeordnet ist.

10. Haushaltslagervorrichtung (1) nach einem der vorangehenden Ansprüche, **dadurch gekennzeichnet, dass**
die Haushaltslagervorrichtung (1) ausgebildet ist, vorzugsweise einem Benutzer, eine Information über den bestimmten Zustand und/oder Füllstand des Objekts (3) zur Verfügung zu stellen.

11. Haushaltslagervorrichtung (1) nach einem der vorangehenden Ansprüche, **dadurch gekennzeichnet, dass**
die Haushaltslagervorrichtung (1) ausgebildet ist, vorzugsweise einem Benutzer, eine Information der bestimmten Zustände und/oder der bestimmten Füllstände aller Objekte (3) zur Verfügung zu stellen, welche im Nutzraum (12) gelagert sind.

12. Objekterkennungssystem (2) für eine Haushaltslagervorrichtung (1) nach einem der vorangehenden Ansprüche
mit wenigstens einer Bilderfassungseinheit (21), welche ausgebildet ist, einen Nutzraum (12) der Haushaltslagervorrichtung (1) zumindest abschnittsweise optisch zu erfassen,
wobei das Objekterkennungssystem (2) ausgebildet ist, basierend auf den optisch erfassten Bilddaten der Bilderfassungseinheit (21) eine Orientierung und/oder eine Positionierung eines Objekts (3) zu erkennen,
wobei das Objekterkennungssystem (2) ferner ausgebildet ist, basierend auf der erkannten Orientierung und/oder Positionierung des Objekts (3) einen Zustand und bzw. oder einen Füllstand des Inhalts des Objekts (3) zu bestimmen.
